# EUROPÄISCHE PATENTSCHRIFT

(11) **EP 2 845 754 B1**
(45) Veröffentlichungstag und Bekanntmachung des Hinweises auf die Patenterteilung: **19.07.2017**
(21) Anmeldenummer: 14180714.9
(22) Anmeldetag: 12.08.2014
(51) Int. Cl.: B60H 1/34, B60H 1/00, B60H 1/24

(54) **Bedienelement und Baugruppe für einen Luftausströmer sowie Verfahren zur Montage eines Bedienelements**
Operating element and assembly for an air diffuser, and method for fitting an operating element
Élément de commande et composant pour un dispositif d'écoulement d'air et procédé de montage d'un élément de commande

(30) Priorität: 10.09.2013 DE 102013109934
(43) Veröffentlichungstag der Anmeldung: 11.03.2015
(73) Patentinhaber: Illinois Tool Works Inc., Glenview, Illinois 66025 (US)
(72) Erfinder: Schlippe, Michael, 67659 Kaiserslautern (DE)
(74) Vertreter: Hauck Patentanwaltspartnerschaft mbB

(56) Entgegenhaltungen:
- EP-A1- 2 439 090
- DE-U1-202004 006 461
- DE-U1-202006 009 088
- DE-U1-202010 008 068
- US-A1- 2006 014 485

## Beschreibung

Die Erfindung betrifft ein Bedienelement für einen Luftausströmer in einem Fahrzeug, mit einem Lagerabschnitt, der zur luftausströmerseitigen Lagerung des Bedienelements dient und eine Aufnahme, insbesondere für eine Lamelle eines Luftausströmers, aufweist, und mit einem Federelement, das in die Aufnahme des Lagerabschnitts ragt, wobei das Federelement einstückig am Bedienelement angeformt ist und das Bedienelement ein Lagerteil aufweist, an dem die Aufnahme vorgesehen ist, sowie ein Halteteil.

Luftausströmer für Fahrzeuge weisen zumindest ein Bedienelement auf, um die Richtung und/oder die Stärke des austretenden Luftstroms zu steuern. Das Bedienelement ist beispielsweise mit einer Aufnahme auf einer verschwenkbaren Lamelle verschiebbar gelagert, die den Luftstrom ablenken kann. Um einerseits ein einfaches Verschieben des Bedienelements auf der Lamelle, andererseits aber auch eine geräuscharme Lagerung des Bedienelements auf der Lamelle zu ermöglichen, sind zwischen Bedienelement und Lamelle zusätzliche Bauteile, beispielsweise Gummielemente oder zusätzliche Federelemente vorgesehen, durch die eine spielfreie Lagerung des Bedienelements auf der Lamelle hergestellt ist.

Bei der Montage dieser bekannten Bedienelemente ist es aber möglich, dass diese zusätzlichen Bauteile beschädigt werden oder verloren gehen. Zusätzliche Federelemente können beispielsweise aufgrund der geringen Größe beim Transport oder bei der Montage verlorengehen. Zudem kann das Federelement bei der Montage verschoben werden, so dass dieses nicht korrekt positioniert ist und nicht die gewünschte Funktion erfüllen kann. Gummielemente bewirken neben einer Federwirkung auch eine Erhöhung der Reibung zwischen Lamelle und Bedienelement, so dass höhere Bedienkräfte erforderlich sind.

In der US 2006/0014485 A1 ist ein Bedienelement für einen Luftausströmer in einem Fahrzeug beschrieben, das ein separates Federelement nutzt, um die eingestellte Position des Bedienelements auf der Lamelle zu sichern.

Aufgabe der Erfindung ist es, ein Bedienelement sowie eine Baugruppe mit einem solchen Bedienelement zu schaffen, die einen einfacheren Aufbau aufweisen, sodass der Herstellungs- und der Montageaufwand reduziert. Gleichzeitig ist eine zuverlässige Funktion sicherzustellen. Aufgabe der Erfindung ist es des Weiteren, ein Verfahren zur Montage eines solchen Bedienelements bereitzustellen.

Zur Lösung der Aufgabe ist bei einem Bedienelement der eingangs genannten Art vorgesehen, dass das Federelement einstückig am Halteteil angeformt ist, also gewissermaßen Teil der Aufnahme ist. Erfindungsgemäß wird also kein separates Federelement verwendet, sondern dieses ist einstückig am Bedienelement angeformt. Da das Federelement kein separates Bauteil ist, sondern einstückig mit dem Bedienelement verbunden ist, weist das Bedienelement wesentlich weniger Bauteile auf. Somit ist eine wesentlich schnellere und einfachere Montage des Bedienelements möglich, da unter anderem nicht auf die exakte Positionierung des Federelements geachtet werden muss. Diese erfolgt automatisch bei korrekter Montage des Bedienelements. Zudem kann das Federelement vor oder während der Montage nicht verloren gehen. Durch das einstückig am Halteteil angeformte Federelement wird die Herstellung und eine spätere Montage des Bedienelements vereinfacht. Die Aufnahme ist beispielsweise durch eine sich durch das Bedienelement erstreckende Aussparung gebildet. Das Anformen zusätzlicher Elemente innerhalb einer solchen Aufnahme, beispielsweise bei einem einteiligen Bedienelement, wäre mit einem sehr großen Herstellungsaufwand verbunden, insbesondere, wenn ein solches Bedienelement aus Kunststoff in einem Spritzgussverfahren hergestellt wird. Aus diesem Grund wird das Federelement einstückig an einem Halteteil angeformt, während die Aufnahme an einem zweiten Bauteil, dem Lagerteil, vorgesehen ist. Da am Lagerteil nur die Aufnahme vorgesehen ist, ist eine einfache Herstellung möglich. Das Halteteil kann so ausgebildet sein, dass das Federelement bei der Herstellung freiliegt, so dass dieses ebenfalls einfach herzustellen ist. Erst bei der Montage des Halteteils am Lagerteil wird das Federelement in die Aufnahme eingeführt. Diese zweiteilige Ausführung des Bedienelements bietet zudem den Vorteil, dass das Lagerteil auch vor der Montage des Halteteils am Luftausströmer montiert werden kann. Da das Federelement nicht in die Aufnahme ragt, kann dieses das Lagerteil bzw. das Bedienelement nicht mit einer Federkraft beaufschlagen und so die Montage behindern oder erschweren. Erst nach der Montage und Positionierung des Lagerteils wird das Halteteil montiert, das Federelement in die Aufnahme geführt und das Bedienelement mit der Federkraft beaufschlagt.

Zur Befestigung des Halteteils am Lagerteil können am Lagerteil und am Halteteil beliebige, korrespondierende Befestigungselemente vorgesehen sein. Um eine einfache und schnelle Montage zu gewährleisten, sind vorzugsweise am Lagerteil und am Halteteil korrespondierende Rastelemente vorgesehen, so dass kein Werkzeug zur Montage des Halteteils am Lagerteil erforderlich ist.

Das Federelement kann eine beliebige Form aufweisen, die geeignet ist, um eine Vorspannung zwischen Bedienelement und Lamelle herzustellen. Das Federelement ist beispielsweise eine Blattfeder, die mit einem oder beiden Enden am Bedienelement angeformt ist.

Es ist aber auch denkbar, dass das Federelement im Wesentlichen U-förmig ausgebildet ist, sich also weiter in die Aufnahme erstreckt, wobei das Federelement mit den Schenkeln des U's einstückig mit dem Bedienelement verbunden ist.

Alternativ kann das Federelement auch zwei, sich vom Bedienelement weg erstreckende, insbesondere flexible, Stege sowie einen, die Stege verbindenden, insbesondere doppel-S-förmigen, Quersteg aufweisen. Durch die Form und Flexibilität der Stege und des Querstegs ist eine individuelle Anpassung der Federkraft möglich.

Zusätzlich kann das Federelement unabhängig von seiner Form einen in die Aufnahme vorstehenden Vorsprung aufweisen. Dieser ermöglicht beispielsweise eine Begrenzung des Verschiebeweges des Bedienelements auf der Lamelle, wodurch eine übermäßige Beanspruchung der Lagerung der Lamelle bzw. der Verstellmechanik für die Lamelle durch ein zu weites Verschieben des Bedienelements zuverlässig verhindert wird. Das Federelement liegt dazu in einer an der Lamelle vorgesehenen, in Längsrichtung der Lamelle verlaufenden Ausnehmung an der Lamelle an. Das Bedienelement kann in Längsrichtung der Lamelle so weit verschoben werden, bis der Vorsprung an einem Ende der Ausnehmung anliegt. Ein weiteres Verschieben ist nicht oder nur gegen einen erhöhten Widerstand möglich. Das Bedienelement kann also nicht oder nur mit einem erhöhten Kraftaufwand über den regulären Verstellbereich des Luftausströmers hinaus verschoben werden.

Das Bedienelement besteht beispielsweise aus Kunststoff. Dadurch ist das Bedienelement zum einen sehr leicht. Zum anderen ist eine einfache Herstellung, beispielsweise mit einem Spritzgiessverfahren, möglich. Vorzugsweise sind im Federelement metallische Zusätze vorgesehen, durch die die Oberflächenhärte und/oder die Abriebfestigkeit des Federelements erhöht wird, sodass ein vorzeitiger Verschleiß des Federelements durch die Reibung zwischen Federelement und Lamelle verhindert werden kann.

Alternativ können das Federelement und/oder das Bedienelement auch eine abriebfeste Beschichtung, insbesondere eine metallische Beschichtung, aufweisen. Durch die Wahl der Beschichtung kann zudem die Reibung zwischen der Lamelle und dem Federelement und somit dem Bedienelement beeinflusst werden. Abhängig von der Beschichtung kann das Bedienelement so mit einem höheren und geringem Widerstand auf der Lamelle verschoben werden. Insbesondere bei einer Ausführungsform mit einem Lagerteil und einem Halteteil kann eine solche Beschichtung einfach aufgebracht werden, indem das fertige Bauteil vollständig oder teilweise in die Beschichtung getaucht oder die Beschichtung galvanisch oder elektrochemisch aufgebracht wird. Die Beschichtung kann aber auch bereits bei der Herstellung des Bauteils aufgebracht werden.

Es ist auch denkbar, dass der Sichtbereich des Bedienelements und das Federelement mit einer Verchromung beschichtet sind. Durch eine solche Verchromung wird neben einer erhöhten Abriebfestigkeit auch ein hochwertiges Erscheinungsbild des Bedienelements hergestellt. Zudem kann so der im Sichtbereich angeordnete Griffbereich des Bedienelements ebenfalls widerstandsfähiger ausgebildet werden. Die beiden Verchromungen können insbesondere gleichzeitig aufgebracht werden.

Die Aufnahme ist beispielsweise eine sich durch das Bedienelement erstreckende Aussparung, durch die eine Lamelle eines Luftausströmers geführt werden kann. Mit einer solchen Aufnahme ist eine sichere Lagerung des Bedienelements an der Lamelle möglich, wobei dieses in Längsrichtung auf der Lamelle verschoben werden kann. Das Federelement ragt in dieser Ausführungsform so in die Aufnahme, dass dieses gegen die Lamelle vorgespannt und somit das Bedienelement spielfrei an der Lamelle gelagert ist.

Erfindungsgemäß ist des Weiteren eine Baugruppe für einen Luftausströmer in einem Fahrzeug vorgesehen, mit zumindest einer Lamelle und einem erfindungsgemäßen Bedienelement, wobei sich die Lamelle durch die Aufnahme erstreckt und das Bedienelement mit der Aufnahme, insbesondere begrenzt verschiebbar, an der Lamelle gelagert ist und das Federelement gegen die Lamelle vorgespannt ist.

Vorzugsweise weist die Lamelle eine sich in Längsrichtung der Lamelle erstreckende Ausnehmung auf, und das Federelement liegt in dieser Ausnehmung an der Lamelle an. Das Bedienelement kann so weit verschoben werden, bis das Federelement am Ende der Ausnehmung anstößt, sodass eine einfache und wirkungsvolle Begrenzung des Verschiebewegs des Bedienelements geschaffen ist. Eine übermäßige Belastung der Lagerung der Lamelle oder des Verstellmechanismus für die Lamelle durch ein zu weites Verschieben des Bedienelements ist somit zuverlässig verhindert.

Des Weiteren ist ein Verfahren zur Montage eines Bedienelements mit einem Lagerteil und einem Halteteil an einer Lamelle eines Luftausströmer vorgesehen, das die folgenden Schritte aufweist:
- Das Lagerteil wird mit der Aufnahme auf die Lamelle, insbesondere in Längsrichtung der Lamelle, aufgeschoben,
- Das Halteteil wird am Lagerteil befestigt, insbesondere verrastet, wobei das Federelement an der Lamelle in Anlage kommt und gegen diese vorgespannt wird.

Ragt das Federelement bereits bei der Montage des Lagerteils in die Aufnahme, beispielsweise weil das Bedienelement einteilig ausgebildet oder das Federelement am Lagerteils vorgesehen ist, ist durch das Federelement die Montage des Bedienelements auf der Lamelle erschwert. Das Federelement würde bereits bei der Montage vorgespannt werden, wodurch ein Aufschieben auf die Lamelle nur mit größerem Kraftaufwand möglich ist. Insbesondere, wenn an der Lamelle eine Ausnehmung vorgesehen ist, würde dies dazu führen, dass durch die Feder, die stark verformt wird, der Widerstand zum Verschieben des Bedienelements auf der Lamelle sehr hoch ist. Zudem kann das Federelement bei der Montage beschädigt werden. Indem das Lagerteil ohne das Federelement, das am separaten Halteteil vorgesehen ist, auf die Lamelle aufgeschoben wird, ist eine einfache Montage des Lagerteils mit einem geringen Widerstand möglich. Erst nachdem das Lagerteil auf die Lamelle aufgeschoben ist und korrekt, insbesondere im Bereich der den Verschiebeweg definierenden Ausnehmung, positioniert ist, wird das Halteteil mit dem Federelement am Lagerteil montiert und die Feder gegen die Lamelle vorgespannt. Ebenso ist durch ein Abnehmen des Halteteils auch eine einfache Demontage des Lagerteils möglich.

Weitere Vorteile und Merkmale ergeben sich aus der nachfolgenden Beschreibung in Verbindung mit den beigefügten Zeichnungen. In diesen zeigen:
- Figur 1 einen Luftausströmer mit einer erfindungsgemäßen Baugruppe,
- Figur 2 eine perspektivische Detailansicht der Baugruppe aus Figur 1 mit einem erfindungsgemäßen Bedienelement, und
- Figur 3 eine Seitenansicht der Baugruppe aus Figur 2.

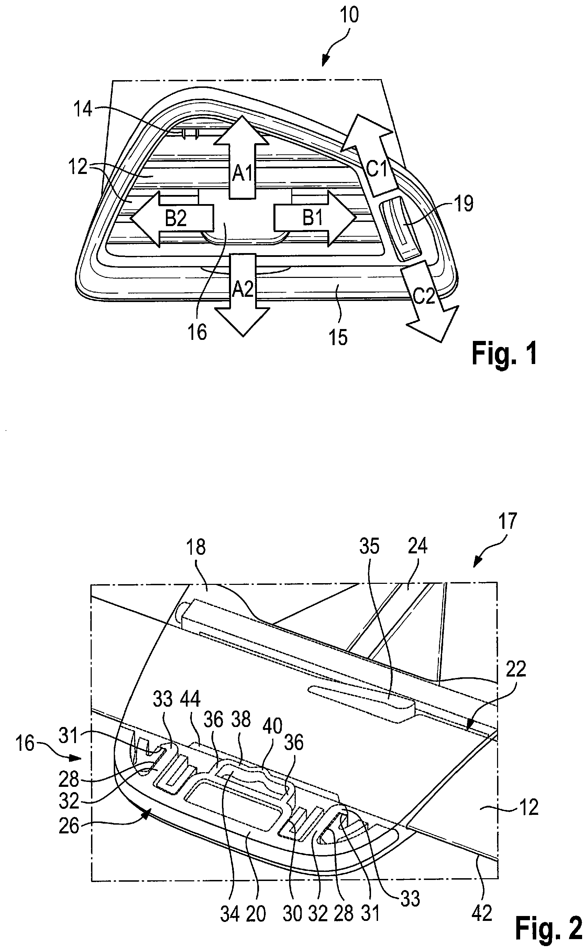

In Figur 1 ist ein Luftausströmer 10 für ein Fahrzeug gezeigt. Der Luftausströmer 10 hat mehrere erste, hier horizontal verlaufende, Lamellen 12 sowie mehrere zweite, hier vertikal verlaufende Lamellen 14, die hinter den ersten Lamellen angeordnet sind. Die Lamellen 12, 14 sind jeweils um ihre Längsachse schwenkbar im Gehäuse 15 des Luftausströmers 10 gelagert und können verschwenkt werden, um den Luftstrom aus dem Luftausströmer 10 abzulenken. Auf einer der Lamellen 12 ist ein Bedienelement 16 vorgesehen, um die Lamellen 12, 14 zu verschwenken. Des Weiteren ist ein Verstellrad 19 vorgesehen, um die durch den Luftausströmer 10 strömende Luftmenge zu regulieren.

Das Bedienelement 16 ist auf der Lamelle 12 in zwei erste Betätigungsrichtungen B1, B2 in Längsrichtung der Lamelle 12 begrenzt verschiebbar. Die zweiten Lamellen 14 sind über eine Betätigungsmechanik derart mit dem Bedienelement 16 gekoppelt, dass die zweiten Lamellen 14 durch ein Verschieben des Bedienelements in die Betätigungsrichtungen B1, B2 um ihre Längsachse verschwenkt werden, so dass der Luftstrom bezüglich Figur 1 nach links oder rechts abgelenkt wird.

Des Weiteren kann das Bedienelement 16 in zwei, senkrecht zu den ersten Betätigungsrichtungen B1, B2 verlaufende zweite Betätigungsrichtungen A1, A2 geschwenkt werden, um die Lamellen 12 um ihre Längsachse zu verschwenken und so den Luftstrom bezüglich Figur 1 nach oben oder nach unten abzulenken.

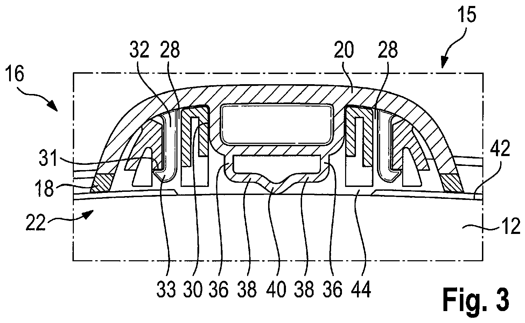

Die Baugruppe 17 aus dem Bedienelement 16 und der Lamelle 12, auf der das Bedienelement 16 gelagert ist, ist im Detail in den Figuren 2 und 3 dargestellt.

Das Bedienelement 16 hat in dieser Ausführungsform zwei Bauteile, ein Lagerteil 18 sowie ein am Lagerteil 18 befestigtes Halteteil 20. Alternativ kann das Bedienelement 16 aber auch aus einem Bauteil bestehen, also einteilig ausgebildet sein.

Das Lagerteil 18 weist eine sich durch das Lagerteil 18 erstreckende Aufnahme 22 auf, die durch eine Aussparung gebildet ist. Die Lamelle 12 erstreckt sich durch diese Aufnahme 22, so dass das Lagerteil 18 auf der Lamelle 12 gelagert ist. Die Aufnahme 22 weist über die gesamte Länge einen gleichbleibenden Querschnitt auf, der im Wesentlichen dem Querschnitt der Lamelle 12 entspricht. So kann das Bedienelement 16 in Längsrichtung der Lamelle 12, also in die Betätigungsrichtungen B1, B2 verschoben werden.

Rückseitig ist am Lagerteil 18 des Weiteren eine gabelförmige Lagerung 24 für eine Betätigungsmechanik der zweiten Lamellen 14 vorgesehen.

Auf der dem Fahrzeuginnenraum zugewandten Vorderseite 26 des Lagerteils 18 sind eine Öffnung 28 sowie zwei Aufnahmekanälen 30 vorgesehen. Die Öffnung 28 erstreckt sich von der Vorderseite 26 bis zur Aufnahme 22.

Das Halteteil 20 weist zwei zu den Aufnahmekanälen 30 korrespondiere, vorstehende Raststege 32 auf. Des Weiteren ist ein Federelement 34 vorgesehen, das einstückig am Halteteil angeformt ist und, wie nachfolgend erläutert wird, in montiertem Zustand des Halteteils 20 am Lagerteil 18 durch die Öffnung 28 in die Aufnahme 22 ragt.

An den Aufnahmekanälen 30 und den Raststegen 32 sind korrespondierende Befestigungselemente 31, 33, hier Rastelemente vorgesehen. Zur Montage des Halteteils 20 am Lagerteil 18 wird das Halteteil 20, insbesondere senkrecht zur Lamelle 12, gegen das Lagerteil 18 geführt, wobei die Raststege 32 in den Aufnahmekanälen 30 und das Federelement 34 in die Öffnung 28 geführt werden, bis die Befestigungselemente 31, 33 miteinander verrasten und das Federelement 34 in die Aufnahme 22 ragt.

Wie in den Figuren 2 und 3 zu sehen ist, weist das Federelement 34 zwei sich vom Halteteil 20 weg erstreckende Stege 36 auf, die flexibel ausgeführt sein können. Diese Stege 36 sind mit einem doppel-S-förmigen Quersteg 38, der flexibel ausgebildet ist, verbunden.

In der Aufnahme 22 wird das Federelement 34 gegen die Lamelle 12 gedrückt und gegen diese vorgespannt. Dadurch ist das Bedienelement 16 spielfrei gegen die Lamelle 12 vorgespannt, sodass diese zwar in Längsrichtung der Lamelle, also in die Betätigungsrichtungen B1, B2 verschoben werden kann, aber eine Geräuschbildung, beispielsweise durch Klappern des Bedienelements 15 gegen die Lamelle 12, zuverlässig verhindert ist.

Auf der Rückseite der Lamelle 12 ist des Weiteren eine Federlasche 35 vorgesehen, die gegenüberliegend zum Federelements 34 gegen die Aufnahme vorgespannt wird, so dass das Bedienelement 16 zwischen Federelement 34 und Federlasche 35 vorgespannt ist.

Wie in Figur 2 zu sehen ist, ist durch die Doppel-S-Form am Quersteg 38 ein Vorsprung 40 gebildet, der in einer an der Lamelle 12 in Längsrichtung an der Vorderkante 42 angeordneten Ausnehmung 44 an der Lamelle 12 anliegt. Durch diese Ausnehmung 44 ist der Verschiebeweg des Bedienelements 16 auf der Lamelle 12 in die Betätigungsrichtungen B1, B2 begrenzt. Das Bedienelement 16 kann so weit in die Betätigungsrichtungen B1, B2 verschoben werden, bis der Vorsprung 40 jeweils an einem Ende der Ausnehmung 44 anliegt. Durch diese Begrenzung des Verschiebewegs ist eine Überbeanspruchung der Betätigungsmechanik für die zweiten Lamellen 14 durch ein zu weites Verschwenken des Bedienelements 16 zuverlässig verhindert.

Aus Kostengründen, aber auch, um eine einfache Herstellung zu gewährleisten, ist das Bedienelement 16 aus Kunststoff hergestellt, wobei das Halteteil 20 und das Lagerteil 18 beispielsweise jeweils in einem Spritzgiessverfahren hergestellt werden können. Durch die zweiteilige Form mit einem Halteteil 20 und einem Lagerteil 18 ist ein einfacheres Spritzgießen der Bauteile möglich, da die einzelnen Bauteile, das Lagerteil 18 und das Halteteil 20, einen wesentlich einfacheren Aufbau mit weniger Hinterschnitten aufweisen.

Eine einteilige Herstellung des Bedienelements 16 ist zwar ebenfalls möglich, aber aufgrund des in einer solchen Ausführungsform bereits bei der Herstellung in die Aufnahme 22 ragenden Federelements 34 deutlich aufwändiger.

Um die Abriebfestigkeit des Federelements 34, das beim Verstellen des Luftausströmers 10 an der Lamelle 12 reibt, zu erhöhen, können im Federelement 34 beispielsweise metallische Zusätze vorgesehen sein, die die Festigkeit des Kunststoffs erhöhen. Alternativ kann auch das gesamte Halteteil 20 solche metallischen Zusätze aufweisen.

Statt solcher metallischer Zusätze ist es auch denkbar, dass das Bedienelement 16 aus Kunststoff gefertigt ist und ganz oder teilweise mit einer abriebfesten Beschichtung versehen wird. Um die Abriebfestigkeit und auch die Gleitfähigkeit des Federelements 34 an der Lamelle 12 zu verbessern, kann beispielsweise auch eine metallische Beschichtung, insbesondere eine Verchromung, verwendet werden.

Das Bedienelement 16 kann lediglich im Sichtbereich und am Federelement 34 mit einer solchen Beschichtung versehen werden, um dem Bedienelement ein hochwertiges Erscheinungsbild zu verleihen. Zudem kann so das Bedienelement im sichtbaren Griffbereich widerstandfähiger ausgebildet werden. Vorzugsweise kann auch das gesamte Halteteil verchromt werden. Die Beschichtung kann bereits während der Herstellung des Lagerteils 18 und des Halteteil 20 oder auch erst nach dem Spritzgiessen der Bauteile aufgebracht werden, beispielsweise elektrochemisch.

In der hier gezeigten Ausführungsform ist das Bedienelement zweiteilig ausgebildet, wobei die Aufnahme 22 für die Lamelle 12 an einem ersten, dem Lagerteil 18 vorgesehen ist und das Federelement 34 an einem zweiten, dem Halteteil 20.

Dies ermöglicht eine einfachere Montage des Bedienelements 16 an der Lamelle 12. In einem ersten Herstellungsschritt kann das Lagerteil 18 in Längsrichtung auf die Lamelle 12 aufgeschoben werden, wobei dies mit einem geringen Widerstand erfolgt, da das Federelement 34 das Bedienelement 16 noch nicht gegen die Lamelle 12 vorspannt. Ist das Lagerteil 18 an der Lamelle 12 positioniert, vorzugsweise im Bereich der Ausnehmung 44, wird das Halteteil 20 auf das Lagerteil 18 aufgesetzt und dabei das Federelement 34 gegen die Lamelle 12 vorgespannt.

Somit ist neben dem einfacheren Aufschieben des Lagerteils 18 auch eine Beschädigung des Federelements 34 durch die erhöhten Kräfte beim Aufschieben des Bedienelements 16 auf die Lamelle 12 zuverlässig verhindert. Für eine einfache Demontage des Bedienelements kann das Halteteil 20 entfernt werden, wodurch ein einfaches Verschieben des Lagerteils 18 möglich ist.

Das Federelement 34 kann statt der Doppel-S-Form aber auch eine beliebige andere Form aufweisen. Es ist lediglich erforderlich, dass das Federelement 34 eine im Wesentlichen senkrecht auf die Lamelle 12 wirkende Federkraft auf diese ausüben kann, um eine spielfreie Lagerung an der Lamelle 12 herzustellen. Das Federelement 34 kann beispielsweise auch U-förmig ausgebildet sein, also statt einem doppel-S-förmigen Quersteg 38 einen geraden Quersteg aufweisen. Es ist auch möglich, dass das Federelement 34 eine Blattfeder ist, die mit einem oder beiden Enden am Bedienelement 16 angeformt ist.

Statt der hier gezeigten Verrastung zwischen Lagerteil 18 und Halteteil 20 können auch andere korrespondierende Befestigungselemente 31, 33 verwendet werden. Insbesondere können andere, korrespondierende Rastelemente verwendet werden.

## Patentansprüche

1. Bedienelement (16) für einen Luftausströmer (10) in einem Fahrzeug, mit einem Lagerabschnitt, der zur luftausströmerseitigen Lagerung des Bedienelements (16) dient und eine Aufnahme (22), insbesondere für eine Lamelle (12) eines Luftausströmers (10), aufweist, und mit einem Federelement (34), das in die Aufnahme (22) des Lagerabschnitts ragt, wobei das Federelement (34) einstückig am Bedienelement (16) angeformt ist und das Bedienelement (16) ein Lagerteil (18) aufweist, an dem die Aufnahme (22) vorgesehen ist, sowie ein Halteteil (20), **dadurch gekennzeichnet, dass** das Federelement (34) einstückig am Halteteil (20) angeformt ist.

2. Bedienelement nach Anspruch 1, **dadurch gekennzeichnet, dass** am Lagerteil (18) und am Halteteil (20) korrespondierende Befestigungselemente, insbesondere Rastelemente, vorgesehen sind.

3. Bedienelement nach einem der vorhergehenden Ansprüche, **dadurch gekennzeichnet, dass** das Federelement (34) eine Blattfeder ist, die mit beiden Enden am Bedienelement (16) angeformt ist.

4. Bedienelement nach einem der vorhergehenden Ansprüche, **dadurch gekennzeichnet, dass** das Federelement (34) im Wesentlichen U-förmig ausgebildet ist, wobei das Federelement (34) mit den Schenkeln des U einstückig mit dem Bedienelement (16) verbunden ist.

5. Bedienelement nach einem der vorhergehenden Ansprüche, **dadurch gekennzeichnet, dass** das Federelement (34) zwei sich vom Bedienelement (16) weg erstreckende, insbesondere flexible Stege (36) sowie einen, die Stege (36) verbindenden, insbesondere doppel-S-förmigen Quersteg (38) aufweist.

6. Bedienelement nach einem der vorhergehenden Ansprüche, **dadurch gekennzeichnet, dass** das Federelement (34) einen in die Aufnahme (22) vorstehenden Vorsprung (40) aufweist.

7. Bedienelement nach einem der vorhergehenden Ansprüche, **dadurch gekennzeichnet, dass** das Bedienelement (16) aus Kunststoff besteht, wobei insbesondere im Federelement (34) metallische Zusätze vorgesehen sind.

8. Bedienelement nach einem der vorhergehenden Ansprüche, **dadurch gekennzeichnet, dass** das Federelement (34) und/oder das Bedienelement (16) eine abriebfeste Beschichtung, insbesondere eine metallische Beschichtung, aufweisen.

9. Bedienelement nach einem der vorhergehenden Ansprüche, **dadurch gekennzeichnet, dass** das Bedienelement (16) im Sichtbereich und das Federelement (34) mit einer Verchromung beschichtet sind.

10. Bedienelement nach einem der vorhergehenden Ansprüche, **dadurch gekennzeichnet, dass** die Aufnahme (22) eine sich durch das Bedienelement (16) erstreckende Aussparung ist, durch die eine Lamelle (12) eines Luftausströmers (10) geführt werden kann.

11. Baugruppe für einen Luftausströmer (10) in einem Fahrzeug, mit zumindest einer Lamelle (12) und einem Bedienelement (16) nach einem der vorhergehenden Ansprüche, wobei sich die Lamelle (12) durch die Aufnahme (22) erstreckt und das Bedienelement (16) mit der Aufnahme (22), insbesondere begrenzt verschiebbar, an der Lamelle (12) gelagert ist und das Federelement (34) gegen die Lamelle (12) vorgespannt ist.

12. Baugruppe nach Anspruch 11, **dadurch gekennzeichnet, dass** die Lamelle (12) eine sich in Längsrichtung der Lamelle (12) erstreckende Ausnehmung (44) aufweist, und das Federelement (34) in dieser Ausnehmung (44) an der Lamelle (12) anliegt.

13. Verfahren zur Montage eines Bedienelements (16) nach einem der Ansprüche 1 bis 10 an einer Lamelle (12) eines Luftausströmers (10), mit folgenden Schritten:
- das Lagerteil (18) wird mit der Aufnahme (22) auf die Lamelle (12), insbesondere in Längsrichtung der Lamelle (12), aufgeschoben,
- das Halteteil (20) wird am Lagerteil (18) befestigt, insbesondere verrastet, wobei das Federelement (34) an der Lamelle (12) in Anlage kommt und gegen diese verspannt wird.

## Claims

1. Operating element (16) for an air diffuser (10) in a vehicle, with a bearing portion which serves for the air-diffuser-side mounting of the operating element (16) and has a receptacle (22), in particular for a slat (12) of an air diffuser (10), and with a spring element (34) which projects into the receptacle (22) of the bearing portion, wherein the spring element (34) is moulded integrally on the operating element (16), and the operating element (16) has a bearing part (18) on which the receptacle (22) is provided, and also a holding part (20), **characterized in that** the spring element (34) is moulded integrally on the holding part (20).

2. Operating element according to Claim 1, **characterized in that** corresponding fastening elements, in particular latching elements, are provided on the bearing part (18) and on the holding part (20).

3. Operating element according to either of the preceding claims, **characterized in that** the spring element (34) is a leaf spring which is moulded at both ends on the operating element (16).

4. Operating element according to one of the preceding claims, **characterized in that** the spring element (34) is of substantially U-shaped design, wherein the spring element (34) is integrally connected by the limbs of the U to the operating element (16).

5. Operating element according to one of the preceding claims, **characterized in that** the spring element (34) has two, in particular flexible, webs (36) extending away from the operating element (16) and also an in particular double S-shaped transverse web (38) connecting the webs (36).

6. Operating element according to one of the preceding claims, **characterized in that** the spring element (34) has a projection (40) projecting into the receptacle (22).

7. Operating element according to one of the preceding claims, **characterized in that** the operating element (16) is composed of plastic, wherein metallic additives are provided in particular in the spring element (34).

8. Operating element according to one of the preceding claims, **characterized in that** the spring element (34) and/or the operating element (16) have/has an abrasion-resistant coating, in particular a metallic coating.

9. Operating element according to one of the preceding claims, **characterized in that** the operating element (16) in the visible region and the spring element (34) are coated with chromium plating.

10. Operating element according to one of the preceding claims, **characterized in that** the receptacle (22) is a cutout which extends through the operating element (16) and through which a slat (12) of an air diffuser (10) can be guided.

11. Assembly for an air diffuser (10) in a vehicle, with at least one slat (12) and an operating element (16) according to one of the preceding claims, wherein the slat (12) extends through the receptacle (22), and the operating element (16) is mounted by means of the receptacle (22), in particular in a manner displaceable to a limited extent, on the slat (12), and the spring element (34) is pretensioned against the slat (12).

12. Assembly according to Claim 11, **characterized in that** the slat (12) has a recess (44) extending in the longitudinal direction of the slat (12), and the spring element (34) lies against the slat (12) in said recess (44).

13. Method for fitting an operating element (16) according to one of Claims 1 to 10 on a slat (12) of an air diffuser (10), with the following steps:
- the bearing part (18) is pushed by means of the receptacle (22) onto the slat (12), in particular in the longitudinal direction of the slat (12),
- the holding part (20) is fastened, in particular latched, to the bearing part (18), wherein the spring element (34) comes to lie against the slat (12) and is braced against the latter.

## Revendications

1. Elément de commande (16) pour un diffuseur d'air (10) dans un véhicule, comprenant une portion de palier qui sert au support de l'élément de commande (16) du côté du diffuseur d'air et qui présente un logement (22), en particulier pour une lamelle (12) d'un diffuseur d'air (10), et comprenant un élément de ressort (34) qui pénètre dans le logement (22) de la portion de palier, l'élément de ressort (34) étant façonné d'une seule pièce sur l'élément de commande (16) et l'élément de commande (16) présentant une partie de palier (18) sur laquelle est prévu le logement (22), ainsi qu'une partie de retenue (20), **caractérisé en ce que** l'élément de ressort (34) est façonné d'une seule pièce sur la partie de retenue (20).

2. Elément de commande selon la revendication 1, **caractérisé en ce que** des éléments de fixation correspondants, en particulier des éléments d'encliquetage, sont prévus sur la partie de palier (18) et sur la partie de retenue (20).

3. Elément de commande selon l'une quelconque des revendications précédentes, **caractérisé en ce que** l'élément de ressort (34) est un ressort à lame qui est façonné avec les deux extrémités sur l'élément de commande (16).

4. Elément de commande selon l'une quelconque des revendications précédentes, **caractérisé en ce que** l'élément de ressort (34) est réalisé essentiellement en forme de U, l'élément de ressort (34) étant connecté par les branches du U d'une seule pièce à l'élément de commande (16).

5. Elément de commande selon l'une quelconque des revendications précédentes, **caractérisé en ce que** l'élément de ressort (34) présente deux nervures (36) s'étendant depuis l'élément de commande (16), en particulier des nervures flexibles, ainsi qu'une nervure transversale (38) reliant les nervures (36), en particulier une nervure transversale en forme de double S.

6. Elément de commande selon l'une quelconque des revendications précédentes, **caractérisé en ce que** l'élément de ressort (34) présente une saillie (40) faisant saillie dans le logement (22).

7. Elément de commande selon l'une quelconque des revendications précédentes, **caractérisé en ce que** l'élément de commande (16) se compose de plastique, des éléments supplémentaires métalliques étant prévus notamment dans l'élément de ressort (34).

8. Elément de commande selon l'une quelconque des revendications précédentes, **caractérisé en ce que** l'élément de ressort (34) et/ou l'élément de commande (16) présentent un revêtement résistant à l'usure, en particulier un revêtement métallique.

9. Elément de commande selon l'une quelconque des revendications précédentes, **caractérisé en ce que** l'élément de commande (16), dans la région visible, et l'élément de ressort (34) sont revêtus d'un chromage.

10. Elément de commande selon l'une quelconque des revendications précédentes, **caractérisé en ce que** le logement (22) est un évidement s'étendant à travers l'élément de commande (16), à travers lequel une lamelle (12) d'un diffuseur d'air (10) peut être guidée.

11. Module pour un diffuseur d'air (10) dans un véhicule, comprenant au moins une lamelle (12) et un élément de commande (16) selon l'une quelconque des revendications précédentes, dans lequel la lamelle (12) s'étend à travers le logement (22) et l'élément de commande (16) avec le logement (22) est supporté sur la lamelle (12), en particulier de manière déplaçable dans une mesure limitée, et l'élément de ressort (34) est précontraint contre la lamelle (12).

12. Module selon la revendication 11, **caractérisé en ce que** la lamelle (12) présente un évidement (44) s'étendant dans la direction longitudinale de la lamelle (12), et l'élément de ressort (34) s'applique dans cet évidement (44) contre la lamelle (12).

13. Procédé pour le montage d'un élément de commande (16) selon l'une quelconque des revendications 1 à 10 sur une lamelle (12) d'un diffuseur d'air (10), comprenant les étapes suivantes :
- la partie de palier (18) est poussée avec le logement (22) sur la lamelle (12), en particulier dans la direction longitudinale de la lamelle (12),
- la partie de retenue (20) est fixée sur la partie de palier (18), en particulier par encliquetage, l'élément de ressort (34) venant en appui contre la lamelle (12) et étant serré contre celle-ci.
